# EUROPÄISCHE PATENTSCHRIFT

(11) **EP 3 320 131 B1**
(45) Veröffentlichungstag und Bekanntmachung des Hinweises auf die Patenterteilung: **02.11.2022**
(21) Anmeldenummer: 16734392.0
(22) Anmeldetag: 04.07.2016
(51) Int. Cl.: C25D 5/14, C08L 69/00, C23C 18/16, C23C 18/20, C23C 18/32, C23C 18/38

(54) **GALVANISIERTES BAUTEIL MIT HOHER WÄRMEFORMBESTÄNDIGKEIT**
GALVANIZED COMPONENT WITH A HIGH RESISTANCE AGAINST DEFORMATION BY HEAT
COMPOSANT GALVANISÉ AYANT UNE GRANDE RÉSISTANCE À LA DÉFORMATION THERMIQUE

(30) Priorität: 06.07.2015 EP 15175423
(43) Veröffentlichungstag der Anmeldung: 16.05.2018
(73) Patentinhaber: Covestro Intellectual Property GmbH & Co. KG, 51373 Leverkusen (DE)
(72) Erfinder: SEIDEL, Andreas, 41542 Dormagen (DE); SCHWARTMANN, Wolfgang, 42699 Solingen (DE); WENZ, Eckhard, 50937 Köln (DE); WEIMAR, Peter, 51371 Leverkusen (DE)
(74) Vertreter: Levpat
(86) Internationale Anmeldenummer: PCT/EP2016/065667
(87) Internationale Veröffentlichungsnummer: WO 2017/005677

(56) Entgegenhaltungen:
- EP-A1- 0 000 146
- EP-B1- 0 183 167
- WO-A1-2013/115903
- CN-A- 102 146 203
- DE-A1- 3 919 043

## Beschreibung

Die Erfindung betrifft ein Bauteil aus einer Polycarbonat-Zusammensetzung als Substrat und einer darauf mittels eines Galvanisierungsprozesses aufgebrachten mehrlagigen Metallschicht, das sich durch eine hohe Formstabilität und eine gute Haftung zwischen Metall und Substrat auch unter hoher Einsatztemperatur und starken Temperaturschwankungen auszeichnet.

Eine spezielle Ausführungsform der Erfindung betrifft ein Bauteil aus einer Polycarbonat-Zusammensetzung als Substrat und einer darauf mittels eines Galvanisierungsprozesses aufgebrachten mehrlagigen Metallschicht, wobei ein für Acrylnitril-Butadien-Styrol (ABS)-Copolymere und deren Blends mit Polycarbonat etabliertes Galvanisierungsverfahren zur Herstellung des Bauteils zum Einsatz kommt und sich das Bauteil durch eine hohe Formstabilität und eine gute Haftung zwischen Metall und Substrat auch unter hoher Einsatztemperatur und starken Temperaturschwankungen auszeichnet.

Die Galvanisierung von ABS- und ABS-Polycarbonat-Zusammensetzungen ist aus der Literatur bekannt.

Mariola Brandes, "The new generation of Futuron - A direct metallisation process for plastics with low Pd content" Galvanotecnica e Nuove Finiture (2003), 13(2), 100-102 offenbart beispielsweise einen Prozess zur Galvanisierung von ABS- und ABS+PC-Zusammensetzungen.

Mariola Brandes, "Direct metalizing of ABS and ABS/PC with increased PC content ", Galvanotechnik (2007), 98(4), 872-875 " offenbart ein verbessertes Verfahren, welches erstmalig die Metallisierung von Polycarbonat-ABS-Formmassen mit bis zu 65 Gew.-% Polycarbonat erlaubt. Zuvor war es nur möglich gewesen, solche Zusammensetzungen mit einem Polycarbonat-Gehalt von maximal 45 Gew.-% zu galvanisieren.

DE102008047833 (A1) offenbart, daß ABS und ABS/PC mittels bekannter Verfahren der Kunststoffgalvanisierung beschichtbar und insbesondere verchrombar sind, wogegen Polycarbonat dagegen bei den Bedingungen des üblichen Kunststoffgalvanisierens inert ist und keine Beschichtung annimmt.

WO 2013/115903 A1 offenbart galvanisierbare PC+ABS-Zusammensetzungen mit erhöhtem Polycarbonat-Anteil und mit verbesserter Haftung der Metallschicht zum Kunststoffsubstrat enthaltend 40 bis 75 Gew.-% Polycarbonat, 24 bis 53 Gew.-% eines ersten Schlagzähmodifikators und 1 bis 7 Gew.-% eines zweiten Schlagzähmodifikators.

CN 102146203 A offenbart PC+ABS-Blends mit verbesserter Galvanisierbarkeit und guten mechanischen Eigenschaften, guter Wärmebeständigkeit und guter Verarbeitbarkeit im Spritzguss enthaltend 20 bis 70 Gew.-% Polycarbonat, 20 bis 75 Gew.-% ABS, 2-10 Gew.-% kautschukreiches butadienbasierendes Pfropfpolymerisat, 0,2 bis 0,5 Gew.-% Calciumcarbonat, 0 bis 1 Gew.-% Antioxidanz und 0 bis 1 Gew.-% Gleitmittel.

EP 0 183 167 B1 offenbart PC+ABS-Zusammensetzungen mit exzellenter Wärmeformbeständigkeit, Zähigkeit und Verarbeitbarkeit im Spritzgussverfahren, welche sich durch eine verbesserte Galvanisierbarkeit auszeichnen, enthaltend 10 bis 90 Gew.-% aromatisches Polycarbonat, 10 bis 90 Gew.-% eines mehrschaligen, kautschukbasierten Pfropfpolymerisats und optional bis zu 60 Gew.-% eines Vinylcopolymerisats.

Die in diesem Stand der Technik genannten, für die Galvanisierung geeigneten ABS- oder ABS-Polycarbonat-Zusammensetzungen weisen aber eine geringe Wärmeformbeständigkeit und aus ihnen hergestellte galvanisierte Bauteile insofern eine geringe maximale Gebrauchstemperatur auf.

Zusammensetzungen mit erhöhter Wärmeformbeständigkeit gegenüber solchen PolycarbonatFormmassen, bei denen das Polycarbonat nur auf Bisphenol A Einheiten basiert, sind ebenfalls aus der Literatur bekannt.

US 2011 0060106 A1 offenbart Polycarbonat-Zusammensetzungen mit verbesserter Wärmebeständigkeit, Tieftemperaturzähigkeit und Fließfähigkeit enthaltend Polycarbonat basierend auf n-Phenylphenolphthalein (PPPBP) als Wiederholungseinheit, ein davon unterschiedliches zweites Polycarbonat und einen Schlagzähmodifikator.

DE 38 32 396 A1 offenbart Polycarbonate basierend auf Dihydroxydiphenylcycloalkanen mit erhöhter Glasübergangstemperatur.

DE 39 19 043 A1 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Polycarbonat basierend auf beispielsweise Bisphenol-A und ein kautschukmodifiziertes Pfropfpolymerisat.

DE 39 13 114 A1 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Polycarbonat basierend auf beispielsweise Bisphenol-A und ein Silikonkautschuk-modifiziertes Pfropfpolymerisat.

DE 39 14 946 A1 offenbart Polycarbonat-Zusammensetzungen mit hoher Wärmeformbeständigkeit und verbesserter Kerbschlagzähigkeit und Spannungsrissbeständigkeit unter Chemikalieneinwirkung enthaltend Polycarbonat basierend auf substituiertem Dihydroxyphenylcycloalkan, kautschukbasiertes Pfropfpolymerisat und optional mindestens ein weiteres thermoplastisches Harz. EP 0 401 629 A2 offenbart Polycarbonat-Zusammensetzungen mit verbesserter Wärmeformbeständigkeit und guter Zähigkeit enthaltend Polycarbonat basierend auf substituiertem Dihydroxydiphenylcycloalkan, Vinylcopolymerisat und kautschukbasiertes Pfropfpolymerisat.

Aus den genannten Anmeldungen lassen sich aber keinerlei Hinweise auf die Galvanisierbarkeit dieser Polycarbonat-Zusammensetzungen mit hoher Wärmeformbeständigkeit ableiten und es sind keine Bauteile aus solchen Polycarbonat-Zusammensetzungen mit hoher Wärmeformbeständigkeit und einer durch Galvanisierung aufgebrachten Metallschicht bekannt.

Derartige Bauteile wären beispielsweise nützlich und kämen damit bevorzugt zum Einsatz als (dekorative) Teile von Automobilen (beispielsweise für Anwendungen unterhalb der Motorhaube oder im Abgasstrombereich), für den Einsatz in elektrisch betriebenen Geräten (beispielsweise für Heizlüfter, Toaster, Wasserkocher / Heißwasserzubereiter, Kaffeemaschinen, Haartrockner, Öfen, etc.), in Haushaltsgegenständen unter hoher Temperaturbelastung (beispielsweise für Griffe von Kochtöpfen, Druckkochtöpfen oder Grills) oder als Teil von Sonnenkollektoren, Lichtreflektoren oder in Funktionselementen zur gezielten Abführung von Wärme. Diese beispielhaften Anwendungsbereiche haben gemein, dass die Bauteile unter hoher Temperaturbelastung stehen, weil sie in räumlicher Nähe zu Wärmequellen (beispielsweise Motoren, elektrisch betriebenen Heizvorrichtungen, heißen Gasströmen, fokussierter Lichteinstrahlung) zum Einsatz kommen und somit bestimmungsgemäß auch hohen Temperaturschwankungen ausgesetzt sind. Unter diesen extremen Einsatzbedingungen sollen die galvanisierten Bauteile formstabil bleiben und eine hinreichende Haftung der Metallschicht zum Kunststoffsubstrat aufweisen sowie eine stabile Oberflächenkosmetik zeigen. Unter den Temperaturwechseln dürfen insbesondere keinerlei blasenförmige oder gar großflächige Metallablösungen auftreten.

Aufgabe der vorliegenden Erfindung war daher die Bereitstellung von galvanisierten Bauteilen aus einem im Wesentlichen amorphen thermoplastischen Kunststoff, die einerseits eine zufriedenstellende Haftung der über den Galvanisierungsprozess aufgebrachten mehrlagigen Metallschicht zum Kunststoffträger und andererseits eine Formstabilität bei einer Temperatur von mindestens 130°C, bevorzugt bei einer Temperatur von mindestens 135°C, besonders bevorzugt von mindestens 140°C und unter starken Temperaturschwankungen im Bereich von Raumtemperatur bis mindestens 130°C, bevorzugt bis mindestens 135°C, besonders bevorzugt bis mindestens 140°C eine gute und stabile Haftung von Substrat und Metallschicht aufweisen.

Eine spezielle Aufgabe der vorliegenden Erfindung bestand in der Bereitstellung der oben genannten galvanisierten Bauteile, wobei ein für Acrylnitril-Butadien-Styrol (ABS)-Copolymere und deren Blends mit Polycarbonat etabliertes Galvanisierungsverfahren zur Herstellung der Bauteile zum Einsatz kommt.

Als zufriedenstellende Haftung der mehrlagigen Metallschicht zum Kunststoffträger wird im Allgemeinen ein Wert von mindestens 0,20 N/mm gemessen im Rollenschälversuch nach DIN 53494 (Version von 1984) angesehen.

Es wurde überraschenderweise gefunden, dass galvanisierte Bauteile basierend auf einem Kunststoffträger hergestellt aus einer thermoplastischen Zusammensetzung bestehend aus
A) 50 bis 90 Gew.-Teilen, bevorzugt 55 bis 88 Gew.-Teilen, besonders bevorzugt 60 bis 87 Gew.-Teilen mindestens eines aromatischen Polycarbonats,
B) 10 bis 50 Gew.-Teilen, bevorzugt 12 bis 45 Gew.-Teilen, besonders bevorzugt 13 bis 40 Gew.-Teilen mindestens eines Pfropfpolymerisats enthaltend eine Dien enthaltende kautschukelastische partikuläre Pfropfgrundlage und eine Vinyl(co)polymerisathülle, wobei der Anteil der Kautschukpartikel in der Pfropfgrundlage mit einem Durchmesser von <200 nm mindestens 20 Gew.-% beträgt,
C) 0 bis 15 Gew.-Teilen, bevorzugt 0,1 bis 5 Gew.-Teilen, besonders bevorzugt 0,2 bis 3 Gew.-Teilen mindestens eines Additivs,
wobei die Summe der Gewichtsteile der Komponenten A) und B) in der Zusammensetzung auf 100 normiert ist,
(i) dadurch gekennzeichnet, dass der Kautschukgehalt aus Komponente B in der der Zusammensetzung mindestens 6 Gew.-%, bevorzugt mindestens 7 Gew.-%, besonders bevorzugt mindestens 9 Gew.-% beträgt,
(ii) dadurch gekennzeichnet, dass das Verhältnis K/S der Gewichtsanteile an Dien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Viny(co)polymerisat aus Komponente B) und etwaigen freiem Vinyl(co)polymerisat aus Komponente C) in der Zusammensetzung (=S) mindestens 1,5, bevorzugt mindestens 1,8, besonders bevorzugt mindestens 2,1 beträgt,
(iii) dadurch gekennzeichnet, dass die Komponente A) mindestens eine Monomereinheit enthält, welche ausgewählt ist aus der Gruppe bestehend aus Monomereinheiten beschrieben durch die allgemeine Formel (2) 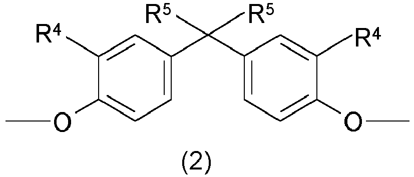 in der
   R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
   R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,
   und solchen von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, bevorzugt solchen über die 1,1'-Stellung eines cyclischen, Kohlenwasserstoffs verbrückten Monomereinheiten, die durch eine der allgemeinen Formeln (la), (1b), (1c) und (1d) beschrieben werden, besonders bevorzugt solchen über die 1,1'-Stellung eines cyclischen, Kohlenwasserstoffs verbrückten Monomereinheiten die durch eine der allgemeinen Formeln (1b), (1c) und (1d) beschrieben werden 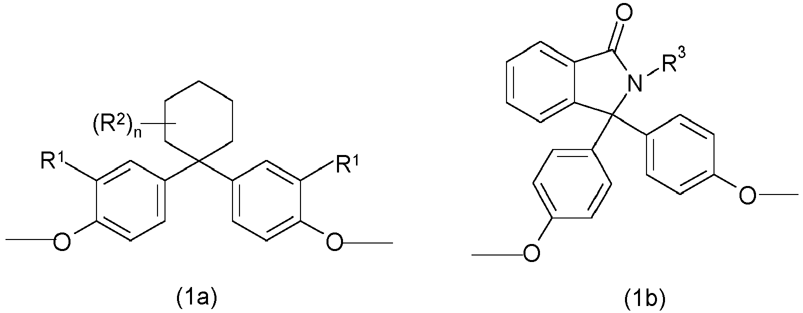 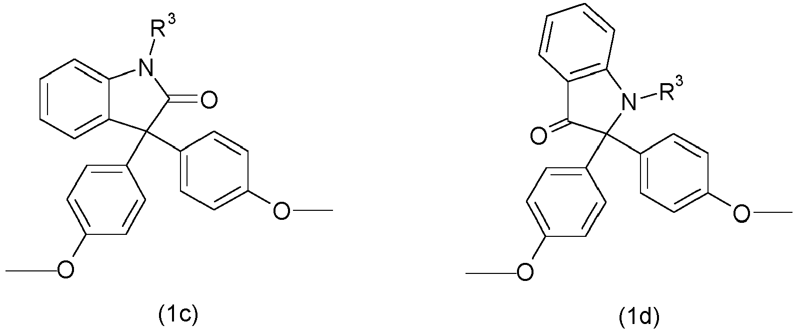
   in denen
   R¹ für Wasserstoff oder C₁-C₄-Alkyl, bevorzugt für Wasserstoff,
   R² für C₁-C₄-Alkyl, bevorzugt Methyl,
   n für 0, 1, 2 oder 3, bevorzugt 3 steht, und
   R³ für C₁-C₄-Alkyl, Aralkyl oder Aryl, bevorzugt für Methyl oder Phenyl, ganz besonders bevorzugt für Phenyl, steht,
(iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 0 bis 40 Gew.-%, bevorzugt im Bereich von 5 bis 40 Gew.-%, besonders bevorzugt im Bereich von 10 bis 37 Gew.-% liegt,

wobei für den Fall, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von <5 Gew.-% liegt, der Gehalt an Komponente A) in der Zusammensetzung bei 75 bis 87 Gew.-Teilen und der Gehalt an Komponente B) in der Zusammensetzung bei 13 bis 25 Gew.-Teilen liegt,
die erfindungsgemäße Aufgabe lösen.

In einer speziellen Ausführungsform basieren die galvanisierte Bauteile auf einem Kunststoff-Träger hergestellt aus einer thermoplastischen Zusammensetzung bestehend aus
A) 50 bis 90 Gew.-Teilen, bevorzugt 55 bis 88 Gew.-Teilen, besonders bevorzugt 60 bis 87 Gew.-Teilen mindestens eines aromatischen Polycarbonats,
B) 10 bis 50 Gew.-Teilen, bevorzugt 12 bis 45 Gew.-Teilen, besonders bevorzugt 13 bis 40 Gew.-Teilen mindestens eines Pfropfpolymerisats bestehend aus einer Dien enthaltenden kautschukelastischen partikulären Pfropfgrundlage und einer Vinyl(co)polymerisathülle, wobei der Anteil der Kautschukpartikel in der Pfropfgrundlage mit einem Durchmesser von <200 nm mindestens 20 Gew.-% beträgt,
   und
C) 0 bis 15 Gew.-Teilen, bevorzugt 0,1 bis 5 Gew.-Teilen, besonders bevorzugt 0,2 bis 3 Gew.-Teilen mindestens eines Additivs,

wobei die Summe der Gewichtsteile der Komponenten A) und B) in der Zusammensetzung auf 100 normiert ist
dadurch gekennzeichnet, dass die oben unter (i), (ii) und (iii) beschriebenen Merkmale gelten und
   (iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 5 bis 40 Gew.-%, besonders bevorzugt im Bereich von 10 bis 37 Gew.-% liegt.

In einer weiteren speziellen Ausführungsform basieren die galvanisierte Bauteile auf einem Kunststoff-Träger hergestellt aus einer thermoplastischen Zusammensetzung bestehend aus
A) 75 bis 87 Gew.-Teilen mindestens eines aromatischen Polycarbonats,
B) 13 bis 25 Gew.-Teilen mindestens eines Pfropfpolymerisats enthaltend eine Dien enthaltende kautschukelastische partikuläre Pfropfgrundlage und eine Vinyl(co)polymerisathülle, wobei der Anteil der Kautschukpartikel in der Pfropfgrundlage mit einem Durchmesser von <200 nm mindestens 20 Gew.-% beträgt,
   und
C) 0 bis 15 Gew.-Teilen, bevorzugt 0,1 bis 5 Gew.-Teilen, besonders bevorzugt 0,2 bis 3 Gew.-Teilen mindestens eines Additivs,

wobei die Summe der Gewichtsteile der Komponenten A) und B) in der Zusammensetzung auf 100 normiert ist
dadurch gekennzeichnet, dass die oben unter (i), (ii) und (iii) beschriebenen Merkmale gelten und
   (iv) dadurch gekennzeichnet, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, bezogen auf die Summe aller von Bisphenolen abgeleiteten Monomereinheiten in der Komponente A) im Bereich von < 5 Gew.-% liegt.

Als von einer Bis-(4-hydroxyphenyl)-Verbindung abgeleitete_Monomereinheit in Komponente A), die über die 1,1'-Stellung eines cyclischen, gegebenenfalls mit Heteroatomen substituierten Kohlenwasserstoffs verbrückt ist, kommt bevorzugt mindestens ein Vertreter, besonders bevorzugt genau ein Vertreter ausgewählt aus der Gruppe bestehend aus den von 1,1-Bis-(4-hydroxyphenyl)-3,3',5-trimethylcyclohexan (Bisphenol-TMC) und 2-Phenyl-3,3'-Bis-(4-hydroxyphenyl)-phthalimid (PPPBP) abgeleiteten Monomereinheiten zum Einsatz.

In Bezug auf die Verarbeitungseigenschaften im Spritzguss sowie die Eigenschaften der aus den Zusammensetzungen hergestellten galvanisierten Bauteile und somit in Bezug auf die Verwendung der Zusammensetzungen und Formmassen zur Herstellung galvanisierter Formteile erweisen sich solche Zusammensetzungen als Substrat zur Herstellung der galvanisierter Bauteile mit hoher Formbeständigkeit und Metallhaftung bei hohen und stark schwankenden Temperaturen als besonders vorteilhaft und insofern bevorzugt, in denen als von einer Bis-(4-hydroxyphenyl)-Verbindung abgeleitete_Monomereinheit in Komponente A), die über die 1,1'-Stellung eines cyclischen, gegebenenfalls mit Heteroatomen substituierten Kohlenwasserstoffs verbrückt ist, die von 2-Phenyl-3,3'-Bis-(4-hydroxyphenyl)-phthalimid (PPPBP) abgeleitete Monomereinheit zum Einsatz kommt.

Die Komponente A) weist in bevorzugter Ausführungsform eine relative Lösungsviskosität von 1,20 bis 1,28, bestimmt nach DIN 51562 in Methylenchlorid (Version von 1999), auf. Hinsichtlich des Kautschukgehalts aus Komponente B in der Zusammensetzung ist die Obergrenze Kₘₐₓ nur durch den Anteil der Komponente B und den Kautschukanteil B.2 in der Komponente B festgelegt über die Formel Kₘₐₓ = B · B.2.

Hinsicht des Verhältnisses K/S gibt es keine Obergrenze, da es grundsätzlich vorteilhaft ist, den Anteil von S zu minimieren. In bevorzugter Ausführungsform enthält die Komponente C daher kein freies (d.h. nicht chemisch an eine Kautschukgrundlage gebundenes) Vinyl(co)polymerisat. Weiterhin bevorzugt ist daher der Einsatz einer Komponente B mit einem möglichst hohem Gelgehalt von mindestens 70 Gew.-%, besonders bevorzugt mindestens 75 Gew.-%, ganz besonders bevorzugt mindestens 80 Gew.-%.

In einer weiteren bevorzugten Ausführungsform ist der Gehalt an freiem Vinyl(co)polymer in der Zusammensetzung (in Summe aus Komponente B und Komponente C) kleiner 7 Gew.-%, besonders bevorzugt kleiner 6 Gew.-%, insbesondere kleiner 5 Gew.-%.

Ein weiterer Aspekt der vorliegenden Erfindung ist die Verwendung der zuvor beschriebenen Formmassen zur Herstellung von galvanisierten Bauteilen, die eine Formstabilität bei einer Temperatur von mindestens 130°C, bevorzugt bei einer Temperatur von mindestens 135°C, besonders bevorzugt bei einer Temperatur von mindestens 140°C und unter starken Temperaturschwankungen im Bereich von Raumtemperatur bis mindestens 130°C, bevorzugt von Raumtemperatur bis mindestens 135°C, besonders bevorzugt von Raumtemperatur bis mindestens 140°C eine gute und stabile Haftung von Substrat und Metallschicht aufweisen.

Die vorliegende Erfindung betrifft daher auch ein Verfahren zur Herstellung von galvanisierten Bauteilen, die eine Formstabilität bei einer Temperatur von mindestens 130°C, bevorzugt bei einer Temperatur von mindestens 135°C, besonders bevorzugt bei einer Temperatur von mindestens 140°C und unter starken Temperaturschwankungen im Bereich von Raumtemperatur bis mindestens 130°C, bevorzugt von Raumtemperatur bis mindestens 135°C, besonders bevorzugt von Raumtemperatur bis mindestens 140°C eine gute und stabile Haftung von Substrat und Metallschicht aufweisen.

Dieses Verfahren ist dadurch charakterisiert, dass
(i) in einem ersten Schritt ein Kunststoffträger aus einer thermoplastischen Zusammensetzung wie oben beschrieben geformt wird, wobei bevorzugt ein Extrusions-, Blasform-, Thermoform- oder Spritzgussverfahren, besonders bevorzugt ein Spritzgussverfahren zur Formgebung bei der Herstellung dieses Trägers zum Einsatz kommt,
(ii) und in einem zweiten Verfahrensschritt dieser Kunststoffträger in einem für Acrylnitril-Butadien-Styrol (ABS)-Copolymere und deren Blends mit Polycarbonat etablierten Galvanisierungsverfahren galvanisiert wird.

Als präferierte Ausführungsformen dieses Herstellungsverfahrens gelten im Verfahrensschritt (i) dieselben Vorzugsbereiche bezüglich der thermoplastischen Zusammensetzungen wie zuvor für das Bauteil beschrieben.

Die Verfahrensparameter im Verfahrensschritt (i) sind bevorzugt so zu wählen, dass das im Galvanisierungsprozess gemäß Verfahrensschritt (ii) eingesetzte Trägerbauteil möglichst spannungsarm ist. Hierfür ist es bei Einsatz von Spritzgussverfahren zur Formgebung vorteilhaft, die Einspritzgeschwindigkeit sowie den Spritz- und Nachdruck möglichst gering und die Werkzeugtemperatur möglichst hoch zu wählen. Die konkreten Bedingungen ergeben sich aus der Werkzeuggeometrie und dem Werkzeuganguss. Vorteilhaft sind spezifische Spritzdrücke von nicht mehr als 600 bar. Der spezifische Nachdruck startet bevorzugt beim Wert des spezifischen Spritzdrucks und wird dann bevorzugt abklingend eingestellt.

Die Werkzeugtemperatur liegt bevorzugt im Bereich 80°C bis 140°C, besonders bevorzugt im Bereich 100 bis 130°C.

Im Verfahrensschritt (i) erweist es sich weiterhin als besonders vorteilhaft und daher bevorzugt, ein variothermes Spritzgussverfahren zum Einsatz zu bringen, in dem das Spritzgusswerkzeug zunächst auf eine Temperatur oberhalb der Glasübergangstemperatur der Polycarbonat-Komponente A), bevorzugt von mindestens 150°C, besonders bevorzugt von mindestens 160°C temperiert wird, diese Temperatur nach Einspritzen der Polycarbonat-Zusammensetzung in das Werkzeug für die Dauer der Nachdruckzeit gehalten und erst danach das Werkzeug auf eine Temperatur unterhalb der Glasübergangstemperatur der Polycarbonat-Komponente A), bevorzugt im Bereich 80°C bis 140°C, besonders bevorzugt im Bereich 100 bis 130°C, abgekühlt, dadurch verfestigt und schließlich entformt wird. Durch derartige Verfahren kann eine weitere Verbesserung der praktischen Wärmeformbeständigkeit der galvanisierten Bauteile gegenüber Standard-Spritzgussverfahren realisiert werden.

Der im Verfahrensschritt (i) hergestellte Kunststoff-Träger kann grundsätzlich eine Platte oder ein dreidimensionales Bauteil beliebiger Form sein.

Der Kunststoff-Träger hat eine Wandstärke von 0,2 bis 10 mm, bevorzugt 1 bis 4 mm, besonders bevorzugt 2 bis 3 mm.

Nach der Herstellung im Verfahrensschritt (i) wird der Kunststoff-Träger bevorzugt so lange zwischengelagert, bis der Nachschwindungsprozess beendet ist. Dazu werden üblicherweise 10 bis 48 h benötigt. Durch diese Zwischenlagerung werden noch im Kunststoffteil befindliche Spannungen weiter reduziert.

Der Verfahrensschritt (ii) der Galvanisierung umfasst die folgenden Einzelschritte:
(ii-1) das Beizen des im Verfahrensschritt (i) hergestellten Kunststoffträgers, beispielsweise und bevorzugt mit Chromschwefelsäure, wobei in bevorzugter Ausführungsform in diesem Verfahrensschritt ein Benetzungshilfsmittel (z.B. Udique^{®} Wetting Agent BL2030 des Herstellers Entone) als Prozesshilfsmittel zum Einsatz kommt, welches die Oberflächenspannung zwischen Kunststoffträger und Beizmittel reduziert, gefolgt von einer chemischen Reduktion der Chromschwefelsäure durch ein Reduktionsmittel wie beispielsweise Eisen-(II)-chlorid und nachfolgendem gründlichen Spülen mit Wasser zur effektiven Entfernung von Chromresten,
(ii-2) die Aktivierung des so vorbehandelten Kunststoffträgers durch Adsorption eines Palladium-Kolloids, bevorzugt ein Palladium-Kolloid mit einer Zinnchlorid Hülle, auf der Trägeroberfläche, (ii-3) die Generierung von Palladium-Keimen zur späteren Abscheidung von chemisch Nickel oder chemisch Kupfer auf der Kunststoffträgeroberfläche durch Zerstörung der Hülle des adsorbierten Palladium-Kolloids durch Behandlung mit einer verdünnten Brönstedt-Säure,
(ii-4) Abscheidung von chemisch Nickel oder chemisch Kupfer auf dem so vorbehandelten Kunststoffträger aus einer Nickel-(II)- oder einer Kupfer-(II)-Salzlösung unter Verwendung eines chemischen Reduktionsmittels, wie beispielsweise ein Dihydrogenphosphitsalz,
(ii-5) elektrochemische Aufbringung einer Kupfermetallschicht,
(ii-6) elektrochemische Aufbringung einer Nickelmetallschicht und
(ii-7) elektrochemische Aufbringung einer weiteren Metallschicht mit einer hohen Beständigkeit gegen Umwelteinflüsse, beispielsweise und bevorzugt eine Chrommetallschicht.

In einer bevorzugten Ausführungsform des Galvanisierungsverfahrens (ii) wird der Kunststoffträger aus Verfahrensschritt (ii-1) vor dem Verfahrensschritt (ii-2) in die wässrige Lösung einer Brönstedt-Säure, bevorzugt in eine k Salzsäurelösung getaucht.

In einer weiteren bevorzugten Ausführungsform des Galvanisierungsverfahrens (ii) wird der Kunststoffträger aus dem Verfahrensschritt (ii-1) vor dem Verfahrensschritt (ii-2) mit einem sogenannten "Conditioner" behandelt, der als Prozesshilfsmittel die Adsorption des Palladium-Kolloids im Verfahrensschritt (ii-2) verbessert. Dabei handelt es sich um Substanzen bevorzugt ausgewählt aus der Gruppe der Amine, bevorzugt um Cyclohexandiamin. Der "Conditioner" wird bevorzugt als wässrige Lösung eingesetzt. Vor oder nach der Behandlung mit dem "Conditioner" kann optional eine zusätzliche Behandlung des Kunststoffträgers mit einer wässrigen Lösung einer Brönstedt-Säure, bevorzugt einer Salzsäurelösung erfolgen.

Das Ausmaß der Palladium-Adsorption wird unter anderem durch die Natur des Palladium-Kolloids und die Bedingungen im Aktivierungschritt (ii-2), insbesondere die Aktivierungsdauer, die Temperatur und die eingesetzte Konzentration des Palladium-Kolloids bestimmt.

Die Bedingungen im Aktivierungsschritt (ii-2) und ggf. in vorgeschalteten Konditionierungsschritten wie zuvor beschrieben werden bevorzugt so gewählt, dass eine Belegung der Kunststoffträgeroberfläche nach dem Verfahrensschritt (ii-3) von mindestens 4 mg Palladium/m², bevorzugt von mindestens 5 mg Palladium/m² resultiert. Die nach dem Verfahrensschritt (ii-3) abgeschiedene Palladiumbelegung liegt bevorzugt bei maximal 50 mg Palladium/m², besonders bevorzugt bei maximal 30 mg Palladium/m².

Im Verfahrensschritt (ii-4) wird eine geschlossene chemisch Nickel oder chemisch Kupferschicht, bevorzugt mit einer Dicke von 500 nm bis 5 µm, besonders bevorzugt von 1 µm bis 2 µm aufgetragen.

In einer bevorzugten Ausführungsform des Galvanisierungsverfahrens (ii) wird im Verfahrensschritt (ii-5) zunächst in einem ersten Schritt
(ii-5.1) eine dünne Verstärkungsschicht aus Nickel oder Kupfer elektrochemisch aufgebracht und danach in einem zweiten Schritt
(ii-5.2) eine dickere Hochglanz-Schicht aus Kupfermetall elektrochemisch aufgebracht, wobei im Verfahrensschritt (ii-5.2) eine höhere Stromdichte zum Einsatz kommt als im Verfahrensschritt (ii-5.1). In besonders bevorzugter Ausführungsform ist die Stromdichte im Verfahrensschritt (ii-5.2) um mindestens 30%, besonders bevorzugt um mindestens 50% höher als die Stromdichte im Verfahrensschritt (ii-5.1). Durch diese bevorzugte Ausführungsform kann die Zeit, die zur Aufbringung der Hochglanz-Kupfermetallschicht notwendig ist, reduziert werden.

Durch die Auswahl der Verfahrensparameter im Schritt (ii-6) kann die Oberflächenerscheinung der erfindungsgemäßen Bauteile bzgl. ihres Glanzes von hochglänzend bis matt variiert werden.

Bevorzugt sind die erfindungsgemäßen Bauteile hochglänzend, d.h. sie weisen einen Glanzgrad von größer 90, bevorzugt größer 95, besonders bevorzugt von größer 98 bei einem Betrachtungswinkel von 60° auf. Unter dem Glanzgrad ist im Rahmen der vorliegenden Anmeldung der nach ISO 2813 in der Version von 2015 bestimmte Wert zu verstehen.

Die erfindungsgemäßen Bauteile bestehen aus einem Kunststoffträger hergestellt aus einer thermoplastischen Zusammensetzung wie zuvor beschrieben und einer daran anhaftenden mehrlagigen Metallschicht bestehend aus mindestens drei, bevorzugt mindestens vier mikroskopisch und/oder chemisch-analytisch differenzierbaren Metalllagen.

Die Dicke der mehrlagigen Metallschicht beträgt 5 bis 200 µm, bevorzugt 10 bis 60 µm, besonders bevorzugt 30 bis 50 µm.

In einer ersten Ausführungsform besteht die mehrlagige Metallschicht aus drei mikroskopisch und chemisch-analytisch differenzierbaren Metalllagen, nämlich, ausgehend vom Kunststoffträger,
(i) aus einer ersten Lage aus Kupfer,
(ii) einer zweiten Lage aus Nickel,
(iii) und einer dritten Lage aus einem Metall mit einer hohen Beständigkeit gegen Umwelteinflüssen, beispielsweise und bevorzugt aus Chrom.

In einer zweiten, bevorzugten Ausführungsform besteht die mehrlagige Metallschicht aus vier mikroskopisch und chemisch-analytisch differenzierbaren Metalllagen, nämlich, ausgehend vom Kunststoffträger,
(i) aus einer ersten Lage aus Nickel,
(ii) einer zweiten Lage aus Kupfer,
(iii) einer dritten Lage aus Nickel,
(iv) und einer vierten Lage aus einem Metall mit einer hohen Beständigkeit gegen Umwelteinflüssen, beispielsweise und bevorzugt aus Chrom.

Die notwendigen Dicken der einzelnen Metalllagen und damit die Dicke der gesamten Metallschicht im Verbundbauteil ergeben sich aus den Anforderungen an die mechanischen Eigenschaften, Beständigkeit gegenüber Umwelteinflüssen, die Wärmeformbeständigkeit und weiteren notwendigen Eigenschaften des Bauteils.

Die Kupfermetalllage weist bevorzugt eine Dicke von 10 bis 50 µm, besonders bevorzugt von 15 bis 30 µm, ganz besonders bevorzugt von 20 bis 30 µm auf.

Die ausgehend vom Kunststoffträger der Kupferschicht folgende Nickelmetallschicht ist in bevorzugter Ausführungsform maximal halb so dick wie die darunter liegende Kupfermetallschicht.

Die oberste Metalllage aus einem Metall mit einer hohen Beständigkeit gegen Umwelteinflüssen, bevorzugt aus Chrom, weist bevorzugt eine Dicke von 100 nm bis 3 µm, besonders bevorzugt von 200 nm bis 1,5 (µm auf.

Für solche Bauteilen, in denen unmittelbar an dem Kunststoffträger eine Nickelmetallschicht grenzt, weist diese gewöhnlich und bevorzugt eine Dicke von 500 nm bis 5 µm, besonders bevorzugt von 1 µm bis 2 µm auf.

### Definitionen

C₁-C₄-Alkyl steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₀-Alkyl darüber hinaus beispielsweise für n-Heptyl und n-Octyl, Pinakyl, Adamantyl, die isomeren Menthyle, n-Nonyl, n-Decyl, C₁-C₃₄-Alkyl darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆-C₃₄-Aryl sind Phenyl, o-, p-, m-Tolyl, Naphthyl, Phenanthrenyl, Anthracenyl oder Fluorenyl.

### Komponente A

Die erfindungsgemäße Zusammensetzung enthält als Komponente A mindestens eine Komponente ausgewählt aus der Gruppe bestehend aus Homo- oder Copolycarbonaten enthaltend eine oder mehrere Monomereinheiten der allgemeinen Formel (2) und Homo- und Copolycarbonaten enthaltend eine oder mehrere von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, bevorzugt solchen über die 1,1'-Stellung eines cyclischen, gegebenenfalls mit Heteroatomen substituierten Kohlenwasserstoffs verbrückten Monomereinheiten der allgemeinen Formeln (la), (1b), (1c),(1d) und optional Monomereinheiten der allgemeinen Formel (2). 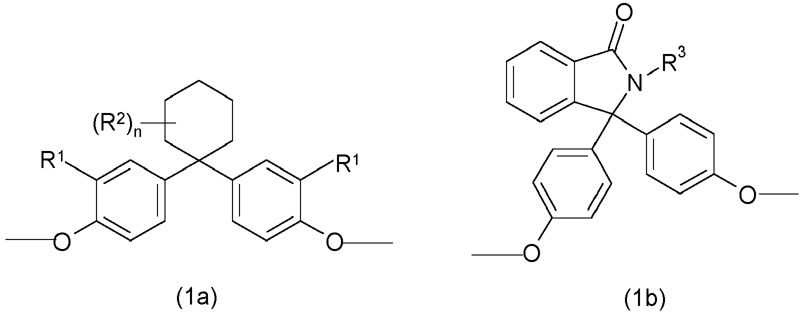 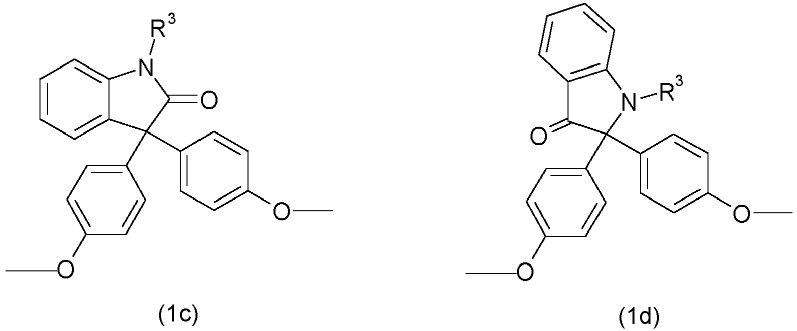 in denen
R¹ für Wasserstoff oder C₁-C₄-Alkyl, bevorzugt für Wasserstoff,
R² für C₁-C₄-Alkyl, bevorzugt Methyl,
n für 0, 1, 2 oder 3, bevorzugt 3 steht, und
R³ für C₁-C₄-Alkyl, Aralkyl oder Aryl, bevorzugt für Methyl oder Phenyl, ganz besonders bevorzugt für Phenyl, steht. 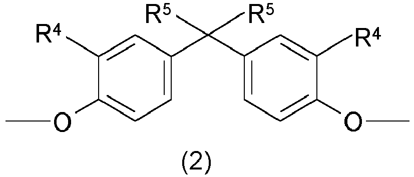
in der
R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht.

Es können auch Mischungen verschiedener Homo- und/oder Copolycarbonate aus der oben genannten Gruppe als Komponente A zum Einsatz kommen.

Die Monomereinheit(en) der allgemeinen Formel (1a) führt man über ein oder mehrere entsprechenden Diphenole der allgemeinen Formel (1a') ein: 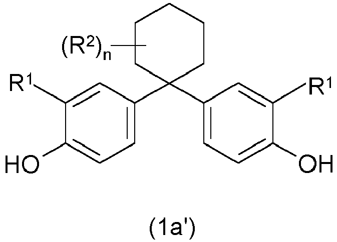 in der
R¹ für Wasserstoff oder C₁-C₄-Alkyl, bevorzugt Wasserstoff,
R² für C₁-C₄-Alkyl, bevorzugt Methyl, und
n für 0, 1, 2 oder 3, bevorzugt 3 stehen.

Die erfindungsgemäß einzusetzenden Diphenole der Formeln (1a) und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (1a"):

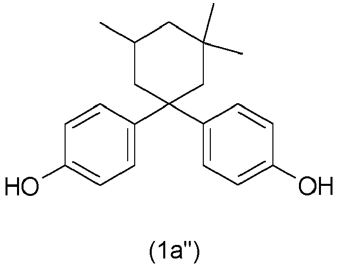

Die Monomereinheit(en) der allgemeinen Formel (1b), (1c) und (1d) führt man über ein oder mehrere entsprechenden Diphenole der allgemeinen Formeln (1b'), (1c') und (1d') ein: 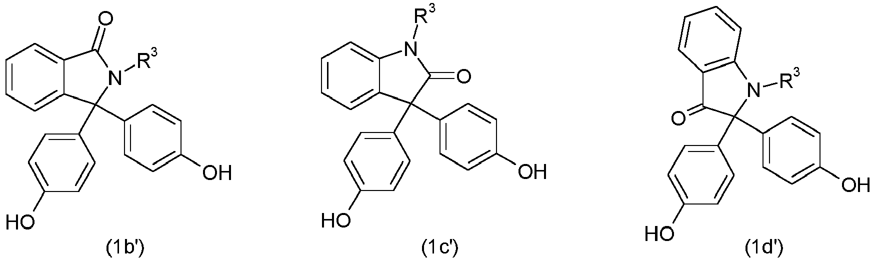 in denen R³ für C₁-C₄-Alkyl, Aralkyl oder Aryl, bevorzugt für Methyl oder Phenyl, ganz besonders bevorzugt für Phenyl, steht.

Die Monomereinheit(en) der allgemeinen Formel (2) führt man über ein oder mehrere entsprechende Diphenole der allgemeinen Formel (2a) ein: 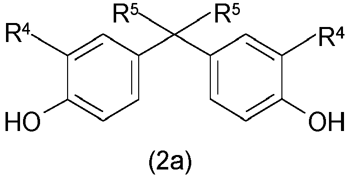
in der R⁴ für H, lineare oder verzweigte C₁-C₁₀-Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in der R⁵ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (2b) ganz besonders bevorzugt.

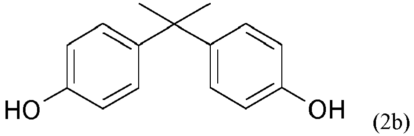

Neben ein oder mehreren Monomereinheiten der Formeln (la), (1b), (1c), (1d) und (2) können in den Polycarbonaten der Komponente A auch ein oder mehrere, von den Monomereinheiten gemäß der Formeln (la), (1b), (1c), (1d) und (2) verschiedene Monomereinheit(en) der Formel (3) enthalten sein: 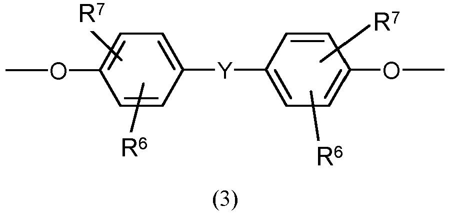 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 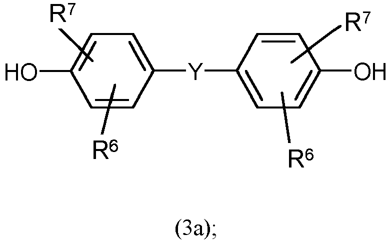 wobei R⁶, R⁷ und Y jeweils die bereits im Zusammenhang mit der Formel (3) erwähnte Bedeutung haben.

Beispielhaft werden für die Diphenole der Formel (3a), die neben den Diphenolen der Formel (1a'), (1b'), (1c'), (1d') und (2) eingesetzt werden können, Hydrochinon, Resorcin, Dihydroxybiphenyle, von Formel (2a) verschiedene Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, a,a'-Bis-(hydroxyphenyl)-diisopropylbenzole, sowie deren kernalkylierte und kernhalogenierte Verbindungen und auch α,ω- Bis-(hydroxyphenyl)-polysiloxane genannt.

Die zur Herstellung der Polycarbonate gemäß Komponente A zum Einsatz kommenden Diphenole sind literaturbekannt und nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Die Copolycarbonatkomponenten in Komponente A können als block- und statistisches Copolycarbonat vorliegen. Besonders bevorzugt sind statistische Copolycarbonate.

Bevorzugte Herstellungsweisen der Homo- oder Copolycarbonate (im Folgenden zusammen auch bezeichnet als (Co)Polycarbonate), die in der erfindungsgemäßen Zusammensetzung als Komponente A bevorzugt eingesetzt werden, sind das Phasengrenzflächenverfahren und das Schmelzeumesterungsverfahren.

Zur Gewinnung hochmolekularer (Co)Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Zur Gewinnung hochmolekularer (Co)Polycarbonate nach dem Schmelzumesterungsverfahren werden Diphenole mit Kohlensäurediestern, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Die relative Lösungsviskosität wird im Rahmen der vorliegenden Anmeldung nach DIN 51652 in der Version von 1999 in Methylenchlorid bestimmt. Bei der in der erfindungsgemäßen Zusammensetzung eingesetzten Komponente A liegt die relative Lösungsviskosität bevorzugt im Bereich von = 1,20 - 1,28. Kommt als Komponente A eine Mischung verschiedener (Co)Polycarbonate zum Einsatz, so liegt die relative Lösungsviskosität dieser als Komponente A eingesetzten Mischung bevorzugt in diesem Bereich von 1,20 - 1,28.

Bei Einsatz von Copolycarbonaten basierend auf mindestens einer Monomereinheit ausgewählt aus der Gruppe charakterisiert durch die allgemeinen Formel (1a) und mindestens einer Monomereinheit ausgewählt aus der Gruppe charakterisiert durch die allgemeinen Formel (2) liegt die relative Lösungsviskosität dieses in Komponente A eingesetzten Copolymers bevorzugt im Bereich von 1,23 - 1,27.

Bei Einsatz von Copolycarbonaten basierend auf mindestens einer Monomereinheit ausgewählt aus einer der Gruppen (1b), (1c), (1d) und mindestens einer Monomereinheit ausgewählt aus der Gruppe charakterisiert durch die allgemeine Formel (2) liegt die relative Lösungsviskosität dieses in Komponente A eingesetzten Copolymers bevorzugt im Bereich von 1,20 - 1,24.

Bei Einsatz von Homo- oder Copolycarbonaten basierend auf mindestens einer Monomereinheit ausgewählt aus der Gruppe charakterisiert durch die allgemeine Formel (2), welche keine von Bis-(4-hydroxyphenyl)-Verbindungen abgeleitete Monomereinheiten, die über die 1,1'-Stellung eines cyclischen, gegebenenfalls mit Heteroatomen substituierten Kohlenwasserstoffs verbrückt sind, enthalten, liegt die relative Lösungsviskosität dieses in Komponente A eingesetzten Homo- oder Copolymers bevorzugt im Bereich von 1,20 - 1,28, ganz besonders bevorzugt im Bereich von 1,23 - 1,27.

### Komponente B

Die Komponente B umfasst ein oder mehrere Pfropfpolymerisate von

| | |
|---|---|
| B.1 | 10 bis 70 Gew.-%, vorzugsweise 15 bis 60 Gew.-%, besonders bevorzugt 20 bis 55 Gew.-% mindestens eines Vinylmonomeren auf |
| B.2 | 30 bis 90 Gew.-%, vorzugsweise 40 bis 85 Gew.-%, besonders bevorzugt 45 bis 80 Gew.-% mindestens einer kautschukelastischen partikulären Pfropfgrundlage ausge- |
| | wählt aus der Gruppe bestehend aus Dienkautschuken und EPDM-Kautschuken (d.h solchen auf Basis Ethylen/Propylen und Dien), |

Die Pfropfgrundlage B.2 hat im Allgemeinen eine mittlere Teilchengröße (dso-Wert) von 0,05 bis 1 µm, vorzugsweise 0,1 bis 0,7 µm, besonders bevorzugt 0,2 bis 0,5 µm.

Der Anteil der Kautschukpartikel in der Pfropfgrundlage B.2 mit einem Durchmesser von <200 nm beträgt mindestens 20 Gew.-%.

Monomere B.1 sind vorzugsweise Gemische aus

| | |
|---|---|
| B.1.1 | 50 bis 99 Gew.-%, bevorzugt 65 bis 85 Gew.-%, bevorzugt 70 bis 80 Gew.-%, jeweils bezogen auf die Gesamtheit der Monomere der Pfropfhülle B.1, Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat und Butylacrylat, und |
| B.1.2 | 1 bis 50 Gew.-%, bevorzugt 15 bis 35 Gew.-%, besonders bevorzugt 20 bis 30 Gew.-%, jeweils bezogen auf die Gesamtheit der Monomere der Pfropfhülle B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid. |

Bevorzugte Monomere B.1.1 sind ausgewählt aus mindestens einem der Monomere Styrol, α-Methylstyrol und Methylmethacrylat. Bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Bevorzugte Pfropfgrundlagen B.2 sind Dienkautschuke (beispielsweise auf Basis Butadien und/oder Isopren) oder Gemische von Dienkautschuken. Unter Dienkautschuken im erfindungsgemäßen Sinne sind auch Dienmonomer-enthaltende Copolymerisate enthaltend copolymerisierbare Monomere (z.B. gemäß B.1.1 und B.1.2) zu verstehen. Es kann sich hierbei sowohl um statistische Copolymerisate als auch Copolymerisate mit Block-Struktur handeln.

Die Pfropfgrundlagen B.2 weisen bevorzugt eine Glasübergangstemperatur von < -30°C, besonders bevorzugt < -50°C, ganz besonders bevorzugt < -70°C auf.

Besonders bevorzugte Polymerisate B sind beispielsweise ABS- Polymerisate, insbesondere solche hergestellt im Emulsionspolymerisationsverfahren, wie sie z.B. in Ullmanns, Enzyklopädie der Technischen Chemie, Bd. 19 (1980), S. 280 ff. beschrieben sind.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere B.1 in Gegenwart der Pfropfgrundlage B.2 gewonnen werden und bei der Aufarbeitung mit anfallen. Diese Produkte können also auch freies, das heißt nicht kovalent an die Pfropfgrundlage B.2 gebundenes Vinyl(co)polymerisat aus B.1.1 und B.1.2 enthalten.

Der Gelanteil der Pfropfpolymerisate B, gemessen in Aceton als Lösungsmittel, beträgt vorzugsweise mindestens 70 Gew.-%, besonders bevorzugt mindestens 75 Gew.-%, ganz besonders bevorzugt mindestens 80 Gew.-%. Dabei stellt der gemäß y = 100% - Gelanteil berechnete Anteil y ein Maß für das freie, das heißt nicht kovalent an die Pfropfgrundlage gebundene Vinyl(co)polymerisat aus B.1.1 und B.1.2 dar.

Vorzugsweise weist das Pfropfpolymerisat aus den Komponenten B.1 und B.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate B werden durch radikalische Polymerisation hergestellt.

Der Gelgehalt der Pfropfpolymerisate B wird bei 25°C in einem geeigneten Lösungsmittel, bevorzugt in Aceton, bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er wird mittels Ultrazentrifugenmessung (W. Scholtan, H. Lange, Kolloid, Z. und Z. Polymere 250 (1972), 782-796) bestimmt. Mit dieser Methode wird im Rahmen der vorliegenden Anmeldung die Kautschukpartikelgrößenverteilung ermittelt. Aus dieser kann auch der Anteil der Kautschukpartikel in der Pfropfgrundlage B.2 mit einem Durchmesser von <200 nm bestimmt werden.

Die Glasübergangstemperatur wird im Rahmen der vorliegenden Anmeldung mittels dynamischer Differenz-Thermoanalyse (DSC) gemäß der Norm DIN EN 61006 (Version von 2004) bei einer Heizrate von 10 K/min mit Definition der T_{g} als Mittelpunkttemperatur (Tangentenmethode) bestimmt.

### Komponente C

Die Zusammensetzung kann als Komponente C ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente B verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weitere von Komponente B verschiedenen Schlagzähigkeitsmodifikatoren, weiteren polymeren Bestandteilen, Farbstoffen und Pigmenten.

In bevorzugter Ausführungsform enthält die Komponente C kein freies (d.h. nicht chemisch an eine Kautschukgrundlage gebundenes) Vinyl(co)polymerisat.

In besonders bevorzugter Ausführungsform enthält die Zusammensetzung mindestens ein Polymeradditiv ausgewählt aus der Gruppe bestehend aus Gleit- und Entformungsmitteln, Stabilisatoren, Fließfahigkeitspromotoren, Verträglichkeitsvermittlern, weiteren von Komponente B verschiedenen Schlagzähigkeitsmodifikatoren, weiteren polymeren Bestandteilen, Farbstoffen und Pigmenten und ist frei von weiteren Polymeradditiven.

In bevorzugter Ausführungsform enthält die Zusammensetzung mindestens ein Polymeradditiv ausgewählt aus der Gruppe bestehend aus Gleit-/Entformungsmitteln und Stabilisatoren.

In besonders bevorzugter Ausführungsform enthält die Zusammensetzung mindestens ein Polymeradditiv ausgewählt aus der Gruppe bestehend aus Gleit-/Entformungsmitteln und Stabilisatoren und ist frei von weiteren Polymeradditiven.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure und sind frei von weiteren Polymeradditiven.

Weiter bevorzugte Zusammensetzungen enthalten als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit, optional eine Brönstedt-Säure und sind frei von weiteren Polymeradditiven.

### Herstellung der Formmassen

Die erfindungsgemäßen thermoplastischen Formmassen können beispielsweise hergestellt werden, indem man die jeweiligen Bestandteile in bekannter Weise vermischt und bei Temperaturen von 220°C bis 360°C, bevorzugt bei 250 bis 330°C, besonders bevorzugt bei 260 bis 320°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen in einem Doppelwellenextruder.

### Beispiele

### Komponente A1:

Lineares Polycarbonat auf Basis Bisphenol-A mit einem gewichtsgemittelten Molekulargewicht M_{w} von 25.000 g/mol (bestimmt durch GPC gegen einen BPA-PC-Standard) und einer relativen Lösungsviskosität von 1,255.

### Komponente A2:

Lineares Polycarbonat auf Basis Bisphenol-A mit einem gewichtsgemittelten Molekulargewicht M_{w} von 18.000 g/mol (bestimmt durch GPC gegen einen BPA-PC-Standard) und einer relativen Lösungsviskosität von 1,20.

### Komponente A3:

Lineares Polycarbonat auf Basis einer Mischung aus 89 Gew.-% Bisphenol-A und 11 Gew.-% TMC-Bisphenol (1,1'-Bis-(4-hydroxyphenyl)-3,3',5-trimethylcyclohexan), mit einem gewichtsgemittelten Molekulargewicht M_{w} von 25.000 g/mol (bestimmt durch GPC gegen einen BPA-PC-Standard) und einer relativen Lösungsviskosität von 1,255.

**Komponente A4:** Lineares Polycarbonat auf Basis einer Mischung aus 55 Gew.-% Bisphenol-A und 45 Gew.-% TMC-Bisphenol (1,1'-Bis-(4-hydroxyphenyl)-3,3',5-trimethylcyclohexan), mit einem gewichtsgemittelten Molekulargewicht M_{W} von 28.000 g/mol (bestimmt durch GPC gegen einen BPA-PC-Standard) und einer relativen Lösungsviskosität von 1,255.

### Komponente A5:

Lineares Polycarbonat auf Basis einer Mischung aus 32 Gew.-% Bisphenol-A und 68 Gew.-% TMC-Bisphenol (1,1'-Bis-(4-hydroxyphenyl)-3,3',5-trimethylcyclohexan), mit einem gewichtsgemittelten Molekulargewicht M_{W} von 29.000 g/mol (bestimmt durch GPC gegen einen BPA-PC-Standard) und einer relativen Lösungsviskosität von 1,255.

### Komponente A6:

Lineares Polycarbonat auf Basis einer Mischung aus 64 Gew.-% Bisphenol-A und 36 Gew.-% 2-Phenyl-3,3'-Bis-(4-hydroxyphenyl)-phthalimid (PPPBP), mit einem gewichtsgemittelten Molekulargewicht M_{W} von 22.500 g/mol (bestimmt durch GPC gegen einen BPA-PC-Standard) und einer relativen Lösungsviskosität von 1,215.

### Komponente B-1:

ABS-Pfropfpolymerisat auf Basis eines Polybutadienkautschuks als Pfropfgrundlage mit einem Acrylnitril : Butadien : Styrol - Verhältnis von 13 : 50 : 37 Gew.-% und mit einem Gelgehalt, gemessen in Aceton, von 80 Gew.-%, hergestellt in Emulsionspolymerisation. Die mittlere Teilchengröße dso der Kautschukgrundlage beträgt 0,4µm und 30 Gew.-% der Kautschukpartikel, welche als Pfropfgrundlage zur Herstellung dieses ABS-Pfropfpolymerisats verwendet wurden, weisen einen Teilchendurchmesser von kleiner als 200 nm, jeweils gemessen durch Ultrazentrifugation, auf.

### Komponente B-2:

ABS-Pfropfpolymerisat auf Basis eines Polybutadienkautschuks als Pfropfgrundlage mit einem Acrylnitril : Butadien : Styrol - Verhältnis von 11 : 59 : 30 Gew.-% und mit einem Gelgehalt, gemessen in Aceton, von 90 Gew.-%, hergestellt in Emulsionspolymerisation. Die mittlere Teilchengröße dso der Kautschukgrundlage beträgt 0,4µm und 0 Gew.-% der Kautschukpartikel, welche als Pfropfgrundlage zur Herstellung dieses ABS-Pfropfpolymerisats verwendet wurden, weisen einen Teilchendurchmesser von kleiner als 200 nm, jeweils gemessen durch Ultrazentrifugation, auf, d.h. alle Kautschukpartikel sind größer als 200 nm.

### Komponente C-1:

SAN-Copolymerisat mit einem Acrylnitrilgehalt von 23 Gew.-% und einem gewichtsgemittelten Molekulargewicht von 130.000 g/mol (bestimmt durch GPC gegen einen Polystyrol-Standard).

### Komponente D-1: Pentaerythrittetrastearat

### Komponente D-2: Phosphitstabilisator Irgafos 168 (BASF, Ludwigshafen, Deutschland)

**Komponente D-3:** Phenolisches Antioxidanz Irganox 1076 (BASF, Ludwigshafen, Deutschland)

### Komponente D-4: Calciumdihydrogenphosphat

### Herstellung und Prüfung der erfindungsgemäßen Formmassen

Das Mischen der Komponenten erfolgte auf einem Zweiwellenextruder ZSK-25 der Fa. Coperion, Werner & Pfleiderer bei einer Massetemperatur von 270 bis 300°C, einem Durchsatz von 20 kg/h und einer Drehzahl von 220 bis 300 min⁻¹. Die am Düsenaustritt gemessenen Temperaturen der Schmelze der Zusammensetzungen betrugen 270 bis 350°C - abhängig von der Viskosität der Zusammensetzung, wobei mit zunehmender Viskosität die Schmelzetemperatur zunahm. Die Formkörper wurden bei einer Massetemperatur von 280°C und einer Werkzeugtemperatur von 80°C auf einer Spritzgießmaschine vom Typ Arburg 270 E hergestellt. Der Fülldruck betrug in allen Fällen maximal 300 bar.

Die Schmelzevolumenflußraten MVR wurden gemäß ISO 1133 (Version von 2012) bei einer Temperatur von 320°C und mit einer Stempellast von 1,2 kg ermittelt.

Die Schmelzeviskositäten wurden gemäß ISO 11443 (Version von 2014) bei 260 bzw. 300 °C, in beiden Fällen bei einer Scherrate von 1000 s⁻¹, ermittelt.

Die Galvanisierbarkeit wurde anhand der Vollständigkeit der in einem für ABS+PC-Zusammensetzungen üblichen Galvanisierungsprozess erzielten Metallbelegung und dem Auftreten von blasenförmigen Metallablösungen direkt nach Durchlaufen des Galvanisierungsprozesses bewertet. Die Bewertung "i.O." bezeichnet dabei ein Ergebnis visuell vollständiger Metallbelegung auf der gesamten Formteiloberfläche ohne jegliche Belegungslücken und ohne jegliche Blasenbildung. Die Überprüfung der Galvanisierbarkeit erfolgte an Platten der Dimensionen 150 mm x 100 mm x 2 mm, die im Spritzgießverfahren unter den oben genannten Bedingungen hergestellt wurden.

Die Galvanisierung erfolgte wie folgt: Der im Spritzguss hergestellte Kunststoffträger wurde zunächst mit Chromschwefelsäure (390 g/Liter Chromsäure und 390 g/Liter konz. Schwefelsäure) für 18 Minuten bei 68°C gebeizt. Danach wurde mit Wasser gespült. Anschließend wurden verbleibende Chromschwefelsäurereste mit Adhemax^{®} Neutralizer CR für eine Minute bei 35°C reduziert, das so behandelte Formteil erneut mit Wasser gespült und danach mit Neolink^{®} H (Hersteller Firma Atotech) als Conditioner für 3 Minuten bei 35°C behandelt. Die Aktivierung des so vorbehandelten Kunststoffträgers erfolgte durch Adsorption eines Palladium-Kolloids mit einer Zinnchlorid-Hülle (Adhemax^{®} Aktivator SF, Hersteller Firma Atotech). Die Aktivierung erfolgte bei 35°C und einer Aktivierungszeit von 4 min. Die Konzentration an Palladium in der wässrigen Aktivierungslösung betrug 50 mg Pd/Liter. Das Kolloid wurde durch nachfolgende Behandlung mit Adhemax^{®} Beschleuniger ACC1 (Hersteller Firma Atotech) für 4 Minuten bei 40°C zerstört, wodurch Palladiumkeime ausgebildet wurden. Es folgte eine Abscheidung von chemisch Nickel aus Adhemax^{®} LSF für 9 Minuten bei 40°C. Anschließend wurde das Bauteil für 30 Sekunden bei Raumtemperatur in Schwefelsäure getaucht. Danach wurde zunächst eine Kupfermetallschicht, gefolgt von einer Nickelmetallschicht, wiederum gefolgt von einer Chrommetallschicht elektrochemisch aufgebracht.

Für die Bestimmung der Haftung der Metallschicht zum Kunststoffträger wurde der oben beschriebene Prozess wiederholt und nach elektrochemischer Aufbringung der Kupfermetallschicht abgebrochen.

Die Dicke der aufgebrachten Kupfermetallschicht lag durchschnittlich bei 30 µm.

Die Haftung der Metallschicht zum Kunststoffträger wurde in einem Rollenschälversuch nach DIN 53494 in der Version von 1989 bestimmt. Dafür wurden aus den oben beschriebenen Platten Probekörper mit einer Länge von 80 mm und einer Breite von (abweichend von der Norm) 10 mm ausgesägt. Die Abzugsgeschwindigkeit lag bei 50 mm/min. Die gemessene Abzugskraft wurde auf die Probenbreite normiert (Messwert in N/mm) und - unter Vernachlässigung der ersten und letzten 10 mm des Abzugsweges - über die gesamte Abzugsstrecke gemittelt. Die angegebenen Messwerte sind die Mittelwerte aus fünf Messungen.

Für die Ermittlung der im Aktivierungsschritt des Galvanisierungsprozesses erzielten PalladiumBelegung wurde der zuvor beschriebene Galvanisierungsprozess wiederholt, jedoch nach der Zerstörung des Palladium-Kolloids abgebrochen. Die so vorbehandelten Platten wurden mit einer Mischung aus einem Volumenteil Königswasser und einem Volumenteil VE-Wasser behandelt und auf diese Weise die Palladiumkeime vollständig in Lösung gebracht. Der Palladium-Gehalt dieser Lösung wurde nach geeigneter Verdünnung mittels optischer Emissionsspektroskopie mit induktiv gekoppeltem Plasma (ICP-OES) ermittelt.

Die Wärmestandfestigkeit des galvanisierten Formteils (Platten der Dimensionen 150 mm x 100 mm x 2 mm) ist diejenige maximale Temperatur (variiert in Schritten von 5°C), bei der nach zweistündiger Lagerung unmittelbar nach Entnahme des Bauteils aus dem Ofen und Abkühlung auf Raumtemperatur kein Verzug sowie keinerlei Ablösung der Metallschicht (z.B. in Form von Blasenbildung) beobachtet wurde.

**Tabelle 1: Die Zusammensetzungen und ihre Eigenschaften**

| Komponenten [Gew.-Teile] | 1 | 2 | 3 | V4 | V5 | 6 | 7 | 8 | 9 | 10 | 11 | V12 | V13 | V14 | V15 | V16 | 17 |
|---|---|---|---|---|---|---|---|---|---|---|---|---|---|---|---|---|---|
| A-1 | 85 | | | | | | | | | | | | | | | | 80 |
| A-2 | | | | | | | 21,25 | 20 | | | | | | | | | |
| A-3 | | 85 | 42,5 | | | | | | 80 | 70 | 60 | 80 | 80 | 80 | 80 | 80 | |
| A-4 | | | 42,5 | 85 | | | 63,75 | 60 | | | | | | | | | |
| A-5 | | | | | 85 | | | | | | | | | | | | |
| A-6 | | | | | | 85 | | | | | | | | | | | |
| B-1 | 15 | 15 | 15 | 15 | 15 | 15 | 15 | 20 | 20 | 30 | 40 | 15 | 10 | 7 | 4 | | 20 |
| B-2 | | | | | | | | | | | | | | | | 17 | |
| C-1 | | | | | | | | | | | | 5 | 10 | 13 | 16 | 3 | |
| D-1 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 |
| D-2 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 |
| D-3 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 | 0,28 |
| D-4 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 | 0,004 |
| Rezepturcharakteristik | | | | | | | | | | | | | | | | | |
| K [Gew.-%] | 7,5 | 7,5 | 7,5 | 7,5 | 7,5 | 7,5 | 7,5 | 10,0 | 10,0 | 15,0 | 20,0 | 7,5 | 5,0 | 3,5 | 2,0 | 10,0 | 10,0 |
| S [Gew.-%] | 3,0 | 3,0 | 3,0 | 3,0 | 3,0 | 3,0 | 3,0 | 4,0 | 4,0 | 6,0 | 8,0 | 8,0 | 12,0 | 14,4 | 16,8 | 4,7 | 4,0 |
| K/S | 2,5 | 2,5 | 2,5 | 2,5 | 2,5 | 2,5 | 2,5 | 2,5 | 2,5 | 2,5 | 2,5 | 0,9 | 0,4 | 0,2 | 0,1 | 2,1 | 2,5 |
| A_{cyc} [Gew.-%] | 0 | 11 | 28 | 45 | 68 | 36 | 34 | 34 | 11 | 11 | 11 | 11 | 11 | 11 | 11 | 11 | 0 |

| Fortsetzung Tabelle 1 | | | | | | | | | | | | | | | | | |
|---|---|---|---|---|---|---|---|---|---|---|---|---|---|---|---|---|---|
| Eigenschaften | 1 | 2 | 3 | V4 | V5 | 6 | 7 | 8 | 9 | 10 | 11 | V12 | V13 | V14 | V15 | V16 | 17 |
| MVR [ml/10min] | 7,6 | 8,6 | 5,5 | 3,6 | 2,1 | 5,0 | 6,5 | 3,8 | 5,7 | 3,9 | 1,9 | 13,6 | 21,7 | 25,8 | 31,0 | 6,7 | 7,8 |
| Viskosität bei 260°C [Pas] | 476 | 597 | | | | | | | 530 | 472 | 439 | 409 | 324 | 294 | 267 | 514 | 448 |
| Viskosität bei 300°C [Pas] | | 254 | 323 | 418 | 641 | 375 | 302 | 281 | 237 | | | | | | | | |
| Pd [mg/m²] | n.g | 5,8 | 5,6 | 5,5 | 4,8 | 6,5 | 4,8 | 6,0 | 8,8 | 16,5 | 25,0 | 7,0 | 6,9 | 5,6 | 5,4 | 12,0 | n.g. |
| Galvanisierung | i.O. | i.O. | i.O. | i.O. | i.O. | i.O. | i.O. | i.O. | i.O. | i.O. | i.O. | i.O. | Blasen | Blasen | Blasen | i.O. | i.O. |
| Haftung [N/mm] | n.g | 0,31 | 0,20 | 0,13 | 0,07 | 0,39 | 0,21 | 0,39 | 0,46 | 0,42 | 0,48 | 0,16 | 0,09 | 0,04 | 0,04 | 0,30 | n.g. |
| Wärme standfestigkeit [°C] | 130 | 140 | 150 | 155 | 150 | 150 | n.g. | 150 | 140 | 150 | 140 | <115 | n.g. | n.g. | n.g. | 145 | 130 |

| | | | | | | | | | | | | | | | | | |
|---|---|---|---|---|---|---|---|---|---|---|---|---|---|---|---|---|---|
| i.O: in Ordnung n.g.: nicht gemessen | | | | | | | | | | | | | | | | | |

Die Beispiele zeigen, dass die erfindungsgemäßen Bauteile gemäß der Beispiele 1-3, 6-11 und 16-17 die der Erfindung zu Grunde liegende Aufgabe erfüllen, während die Bauteile gemäß der Vergleichsbeispiele V4, V5 und V12-V15 in mindestens einer Eigenschaft vom Zieleigenschaftsprofil gemäß der erfindungsgemäßen Aufgabe abweichen.

Die Bauteile basierend auf den Zusammensetzungen gemäß der Beispiele 1 und 17, in denen kein Polycarbonat enthaltend von Bis-(4-hydroxyphenyl)-Verbindungen abgeleitete Monomereinheiten, die über die 1,1'-Stellung eines cyclischen, gegebenenfalls mit Heteroatomen substitutierten Kohlenwasserstoffs verbrückt sind, eingesetzt wird, resultiert im galvanisierten Bauteil eine gerade noch ausreichende Wärmestandfestigkeit. Wie ein Vergleich des Beispiels 1 und 17 mit den bevorzugten entsprechenden erfindungsgemäßen Beispielen 2 und 3 sowie 6-9 zeigt, ist es jedoch im Hinblick auf die Wärmestandfestigkeit des galvanisierten Bauteils vorteilhaft, als Komponente A ein Polycarbonat einzusetzen, welches in begrenzten Mengen von Bis-(4-hydroxyphenyl)-Verbindungen abgeleitete Monomereinheiten enthält, die über die 1,1'-Stellung eines cyclischen, gegebenenfalls mit Heteroatomen substitutierten Kohlenwasserstoffs verbrückt sind.

Bei den Bauteilen gemäß der Vergleichsbeispiele V4 und V5 enthaltend Zusammensetzungen, in denen dagegen ein Polycarbonat mit zu hohem Gehalt an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, eingesetzt wird, resultiert eine unzureichende Haftung der Metallschicht an den Kunststoffträger.

Die Bauteile gemäß der erfindungsgemäßen Beispiele 10 und 11 zeigen, dass bei Verwendung von Polycarbonat enthaltend eine Mindestmenge von Bis-(4-hydroxyphenyl)-Verbindungen abgeleitete Monomereinheiten, die über die 1,1'-Stellung eines cyclischen, gegebenenfalls mit Heteroatomen substitutierten Kohlenwasserstoffs verbrückt sind, eine ausreichende Wärmestandfestigkeit des galvanisierten Bauteils auch noch mit Polycarbonat-Gehalten bis herab zu 60 Gew.-%, bezogen auf die Summe aus PC und ABS, erzielt werden kann.

Die Polycarbonat-Zusammensetzung im Bauteil gemäß Vergleichsbeispiel V12 verwendet dieselbe Polycarbonat-Komponente wie die im Bauteil gemäß dem erfindungsgemäßen Beispiel 2 eingesetzte Zusammensetzung und weist auch denselben Kautschukgehalt auf. Im Bauteil gemäß Vergleichsbeispiel V12 resultiert jedoch gegenüber dem erfindungsgemäßen Beispiel 2, in dem eine Polycarbonat-Zusammensetzung mit einem geringeren Gehalt an freiem Vinylcopolymer S und daher mit einem höheren Verhältnis von K/S zum Einsatz kommt, eine unzureichende Haftung der Metallschicht an den Kunststoffträger und eine zu geringe Wärmestandfestigkeit des Bauteils. Gleiches gilt auch für die Vergleichsbeispiele V13 bis V15 mit weiter reduziertem Verhältnis K/S, wobei hier bereits vor einer Wärmebehandlung unvollständige Haftung der Metallschicht an den Kunststoffträger in Form von Blasenbildung beobachtet wird.

Ein Vergleich der bevorzugten erfindungsgemäßen Beispiele 8 und 9 gegenüber den entsprechenden Beispielen 7 bzw. 2 mit geringerem Kautschukgehalt zeigt, dass mit weiter erhöhtem Kautschukgehalt die Fließfähigkeit der Schmelze und damit das Verarbeitungsverhalten verbessert, die Haftung der Metallschicht zum Kunststoffträger erhöht und im Falle des Vergleichs von Beispielen 8 und 7 sogar die Wärmestandfestigkeit zusätzlich verbessert wird.

Ein Vergleich des Vergleichsbeispiels V16 mit dem erfindungsgemäßen Beispiel 9 ähnlicher Zusammensetzung zeigt den grundsätzlichen Vorteil des Einsatzes eines kautschukhaltiges Pfropfpolymers mit einem hohen Anteil kleiner Kautschukpartikel in der Pfropfgrundlage in Bezug auf die mit bestimmten Palladium-Belegungen erzielte Metall-Kunststoff-Haftung. Hierdurch ist es möglich, die Menge des im Galvanisierungsprozess eingesetzten Palladiums zu reduzieren und dadurch die Prozesskosten zu reduzieren. Ein Vergleich des erfindungsgemäßen Beispiels 3 und des Vergleichsbeispiels V4 mit dem bevorzugten, erfindungsgemäßen Beispiel 6 ähnlicher Zusammensetzung zeigt, dass sich bei Einsatz von Polycarbonaten enthaltend von 2-Phenyl-3,3'-Bis-(4-hydroxyphenyl)-phthalimid (PPPBP) abgeleiteten Monomereinheiten im Vergleich zu Polycarbonaten enthaltend von 1,1-Bis-(4-hydroxyphenyl)-3,3',5-trimethylcyclohexan (Bisphenol-TMC) abgeleiteten Monomereinheiten bei vergleichbarer Schmelzefließfähigkeit und Wärmestandfestigkeit der galvanisierten Bauteile eine weiter verbesserte Metallhaftung realisieren lässt.

## Patentansprüche

1. Verbundbauteil bestehend aus einem Kunststoffträger und einer über einen Galvanisierungsprozess aufgebrachten mehrlagigen Metallschicht, wobei der Kunststoffträger hergestellt ist aus einer thermoplastischen Zusammensetzung bestehend aus
A) 50 bis 90 Gew.-Teilen mindestens eines aromatischen Polycarbonats,
B) 10 bis 50 Gew.-Teilen mindestens eines Pfropfpolymerisats enthaltend eine Dien enthaltende kautschukelastische partikuläre Pfropfgrundlage und eine Vinyl(co)polymerisathülle, wobei der Anteil der Kautschukpartikel in der Pfropfgrundlage mit einem Durchmesser von <200 nm ermittelt nach dem in der Beschreibung angegebenen Verfahren mindestens 20 Gew.-% beträgt,
C) 0 bis 15 Gew.-Teilen mindestens eines Additivs,
wobei die Summe der Gewichtsteile der Komponenten A) und B) in der Zusammensetzung auf 100 normiert ist,
(i) **dadurch gekennzeichnet, dass** der Kautschukgehalt aus Komponente B in der Zusammensetzung mindestens 6 Gew.-% beträgt,
(ii) **dadurch gekennzeichnet, dass** das Verhältnis K/S der Gewichtsanteile an Butadien enthaltender kautschukelastischer partikulärer Pfropfgrundlage aus Komponente B) in der Zusammensetzung (=K) zur Summe aus freiem, das heißt nicht an die Kautschukgrundlage im Pfropfpolymer gemäß Komponente B) kovalent gebundenem Viny(co)polymerisat aus Komponente B) und etwaigen freiem Vinyl(co)polymerisat aus Komponente C) in der Zusammensetzung (=S) mindestens 1,5 beträgt,
(iii) **dadurch gekennzeichnet, dass** die Komponente A) mindestens eine Monomereinheit enthält, welche ausgewählt ist aus der Gruppe bestehend aus Monomereinheiten beschrieben durch die allgemeine Formel (2) 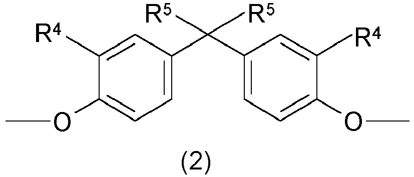 in der
R⁴ für H, lineare oder verzweigte C₁-C₁₀ Alkyl steht, und
R⁵ für lineare oder verzweigte C₁-C₁₀ Alkyl steht,
und solchen von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind,
(iv) **dadurch gekennzeichnet, dass** der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substitutierten Kohlenwasserstoffs verbrückt sind, bezogen auf die Summe aller von Bisphenolen abgeleiteten Monomereinheiten in der Komponente A) im Bereich von 0 bis 40 Gew.-% liegt,
wobei für den Fall, dass der Anteil (A_{cyc}) an von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, bezogen auf die Summe aller von Bisphenolen abgeleiteten Monomereinheiten in der Komponente A) im Bereich < 5 Gew.-% liegt, der Gehalt an Komponente A) in der Zusammensetzung bei 75 bis 87 Gew.-Teilen und der Gehalt an Komponente B) in der Zusammensetzung bei 13 bis 25 Gew.-Teilen liegt.

2. Verbundbauteil gemäß Anspruch 1 bestehend aus einem Kunststoffträger und einer über einen Galvanisierungsprozess aufgebrachten Metallschicht, wobei der Kunststoffträger hergestellt ist aus einer thermoplastischen Zusammensetzung bestehend aus
A) 60 bis 87 Gew.-Teilen mindestens eines aromatischen Polycarbonats,
B) 13 bis 40 Gew.-Teilen mindestens eines Pfropfpolymerisats enthaltend eine Dien enthaltende kautschukelastische partikuläre Pfropfgrundlage und eine Vinyl(co)polymerisathülle,
C) 0,2 bis 3 Gew.-Teilen mindestens eines Additivs,
wobei die Summe der Gewichtsteile der Komponenten A) und B) in der Zusammensetzung auf 100 normiert ist.

3. Verbundbauteil gemäß Anspruch 1 oder 2, **dadurch gekennzeichnet, dass** das Verhältnis K/S mindestens 2,1 beträgt.

4. Verbundbauteil gemäß einem der vorherigen Ansprüche, **dadurch gekennzeichnet, dass** A_{cyc} zwischen 10 und 37 Gew.-% liegt.

5. Verbundbauteil gemäß einem der vorherigen Ansprüche, **dadurch gekennzeichnet, dass** die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formeln 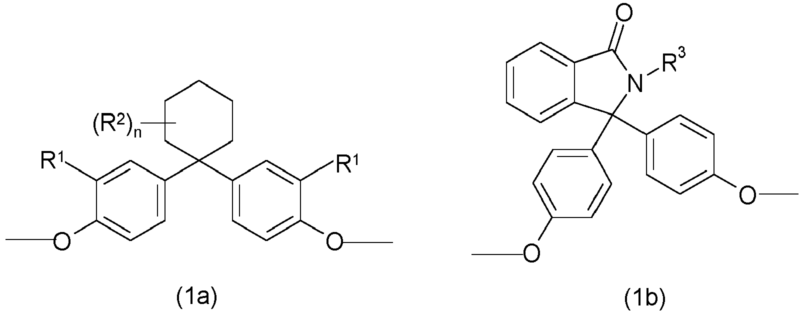 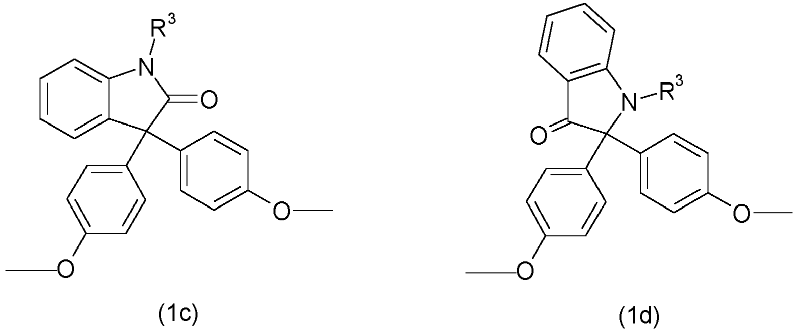 in denen
R¹ für Wasserstoff oder C₁-C₄-Alkyl,
R² für C₁-C₄-Alkyl,
n für 0, 1, 2 oder 3 und
R³ für C₁-C₄-Alkyl, Aralkyl oder Aryl steht,
beschrieben sind.

6. Verbundbauteil gemäß Anspruch 5, **dadurch gekennzeichnet, dass** die die von Bis-(4-hydroxyphenyl)-Verbindungen abgeleiteten Monomereinheiten, die über die 1,1'-Stellung eines cyclischen, gegebenenfalls mit Heteroatomen substituierten Kohlenwasserstoffs verbrückt sind, ausgewählt sind aus den Strukturen, die durch die Formeln (1b), (1c) und (1d) beschrieben sind.

7. Verbundbauteil gemäß Anspruch 6, **dadurch gekennzeichnet, dass** die von Bis-(4-hydroxyphenyl)-Verbindungen abgeleitete Monomereinheit, die über die 1,1'-Stellung eines cyclischen, gegebenenfalls mit Heteroatomen substituierten Kohlenwasserstoffs verbrückt ist, von 2-Phenyl-3,3'-Bis-(4-hydroxyphenyl)-phthalimid abgeleitet ist.

8. Verbundbauteil gemäß einem der vorherigen Ansprüche, **dadurch gekennzeichnet, dass** die relative Lösungsviskosität der Komponente A gemessen in Methylenchlorid nach DIN 51562 im Bereich von 1,20 bis 1,28 liegt.

9. Verbundbauteil gemäß einem der vorherigen Ansprüche, **dadurch gekennzeichnet, dass** die Metallschichtoberfläche einen Glanzgrad gemessen nach ISO 2813 bei einem Betrachtungswinkel von 60° von größer 90 aufweist.

10. Verbundbauteil gemäß einem der vorherigen Ansprüche, **dadurch gekennzeichnet, dass** die mehrlagige Metallschicht aus mindestens 3 mikroskopisch und/oder chemisch-analytisch differenzierbaren Metalllagen besteht.

11. Verbundbauteil gemäß einem der vorherigen Ansprüche, **dadurch gekennzeichnet, dass** die mehrlagige Metallschicht aufgebaut ist ausgehend vom Kunststoff-Träger
aus einer ersten Lage aus Kupfer, einer zweiten Lage aus Nickel, und einer dritten Lage aus Chrom oder
aus einer ersten Lage aus Nickel, einer zweiten Lage aus Kupfer, einer dritten Lage aus Nickel und einer vierten Lage aus Chrom.

12. Verbundteil gemäß Anspruch 11, **dadurch gekennzeichnet, dass** die ausgehend vom Kunststoff-Träger der Kupfermetallschicht folgende Nickelmetallschicht maximal halb so dick ist wie die darunter liegende Kupfermetallschicht.

13. Verbundbauteil gemäß einem der vorherigen Ansprüche, **dadurch gekennzeichnet, dass** die mehrlagige Metallschicht eine Dicke von 30 bis 50 µm aufweist.

14. Verwendung des Verbundbauteils gemäß einem der Ansprüche 1 bis 13 als Teil von Automobilen, elektrisch betriebenen Geräten, Haushaltsgegenständen, Sonnenkollektoren, Lichtreflektoren oder als Funktionselement zur Abführung von Wärme.

## Claims

1. Composite component part consisting of a plastics carrier and a multi-ply metal layer applied via a galvanizing process, wherein the plastics carrier is produced from a thermoplastic composition consisting of
A) 50 to 90 parts by weight of at least one aromatic polycarbonate,
B) 10 to 50 parts by weight of at least one graft polymer comprising a diene-containing elastomeric particulate graft base and a vinyl (co)polymer sheath, wherein the proportion of rubber particles in the graft base having a diameter of <200 nm determined according to the method specified in the description is at least 20 wt%,
C) 0 to 15 parts by weight of at least one additive,
wherein the sum of the parts by weight of components A) and B) in the composition is normalized to 100,
(i) **characterized in that** the rubber content from component B in the composition is at least 6 wt%,
(ii) **characterized in that** the ratio K/S of the weight fractions of butadiene-containing elastomeric particulate graft base from component B) in the composition (=K) to the sum of free, i.e. not covalently bonded to the rubber base in the graft polymer according to component B), vinyl (co)polymer from component B) and any free vinyl (co)polymer from component C) in the composition (=S) is at least 1.5,
(iii) **characterized in that** component A) comprises at least one monomer unit selected from the group consisting of monomer units described by general formula (2) 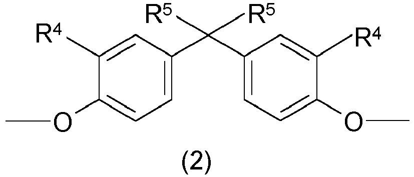 in which
R⁴ represents H, linear or branched C₁-C₁₀ alkyl and
R⁵ represents linear or branched C₁-C₁₀ alkyl,
and such monomer units derived from bis(4-hydroxyphenyl) compounds and bridged via the 1,1'-position of a cyclic hydrocarbon optionally substituted with heteroatoms,
(iv) **characterized in that** the proportion (A_{cyc}) of monomer units derived from bis(4-hydroxyphenyl) compounds and bridged via the 1,1'-position of a cyclic hydrocarbon optionally substituted with heteroatoms based on the sum of all monomer units derived from bisphenols in component A) is in the range from 0 to 40 wt%,
wherein in the case where the proportion (A_{cyc}) of monomer units derived from bis(4-hydroxyphenyl) compounds and bridged via the 1,1'-position of a cyclic hydrocarbon optionally substituted with heteroatoms based on the sum of all monomer units derived from bisphenols in component A) is in the range <5 wt%, the content of component A) in the composition is 75 to 87 parts by weight and the content of component B) in the composition is 13 to 25 parts by weight.

2. Composite component part according to Claim 1 consisting of a plastics carrier and a metal layer applied via a galvanizing process, wherein the plastics carrier is produced from a thermoplastic composition consisting of
A) 60 to 87 parts by weight of at least one aromatic polycarbonate,
B) 13 to 40 parts by weight of at least one graft polymer comprising a diene-containing elastomeric particulate graft base and a vinyl (co)polymer sheath,
C) 0.2 to 3 parts by weight of at least one additive,
wherein the sum of the parts by weight of components A) and B) in the composition is normalized to 100.

3. Composite component part according to either of Claims 1 and 2, **characterized in that** the ratio K/S is at least 2.1.

4. Composite component part according to any of the preceding claims, **characterized in that** A_{cyc} is between 10 and 37 wt%.

5. Composite component part according to any of the preceding claims, **characterized in that** the monomer units derived from bis(4-hydroxyphenyl) compounds and bridged via the 1,1'-position of a cyclic hydrocarbon optionally substituted with heteroatoms are selected from the structures described by the formulae 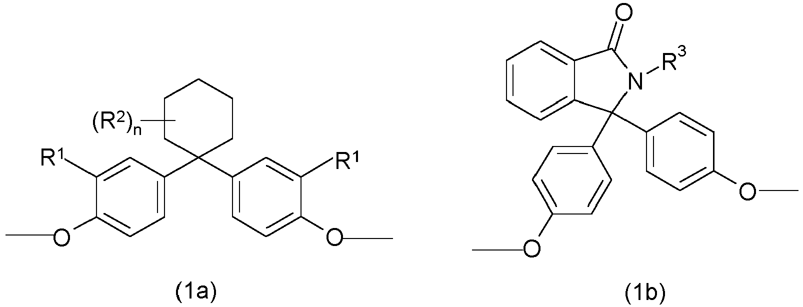 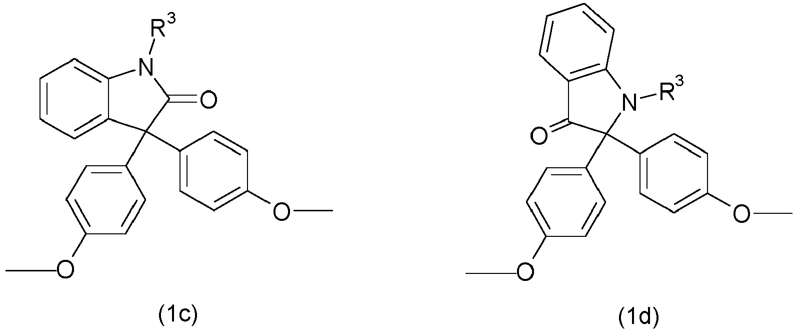 in which
R¹ represents hydrogen or C₁-C₄-alkyl,
R² represents C₁-C₄-alkyl,
n represents 0, 1, 2 or 3 and
R³ represents C₁-C₄-alkyl,aralkyl or aryl.

6. Composite component part according to Claim 5, **characterized in that** the monomer units derived from bis(4-hydroxyphenyl) compounds and bridged via the 1,1'-position of a cyclic hydrocarbon optionally substituted with heteroatoms are selected from the structures described by the formulae (1b), (1c) and (1d).

7. Composite component part according to Claim 6, **characterized in that** the monomer unit derived from bis(4-hydroxyphenyl) compounds and bridged via the 1,1'-position of a cyclic hydrocarbon optionally substituted with heteroatoms is derived from 2-phenyl-3,3'-bis(4-hydroxyphenyl)phthalimide.

8. Composite component part according to any of the preceding claims, **characterized in that** the relative solution viscosity of component A measured in methylene chloride according to DIN 51562 is in the range from 1.20 to 1.28.

9. Composite component part according to any of the preceding claims, **characterized in that** the metal layer surface has a gloss measured according to ISO 2813 at a viewing angle of 60° of greater than 90.

10. Composite component part according to any of the preceding claims, **characterized in that** the multi-ply metal layer consists of at least 3 metal plies distinguishable by microscopy and/or chemical analysis.

11. Composite component part according to any of the preceding claims, **characterized in that** the multi-ply metal layer is constructed, starting from the plastics carrier,
from a first ply of copper, a second ply of nickel and a third ply of chromium or
from a first ply of nickel, a second ply of copper, a third ply of nickel and a fourth ply of chromium.

12. Composite part according to Claim 11, **characterized in that** the nickel metal layer which, starting from the plastics carrier, follows the copper metal layer has a thickness of not more than half of that of the copper metal layer therebelow.

13. Composite component part according to any of the preceding claims **characterized in that** the multi-ply metal layer has a thickness of 30 to 50 µm.

14. Use of the composite component part according to any of Claims 1 to 13 as a part of automobiles, electrically operated devices, household objects, solar collectors, light reflectors or as a functional element for the removal of heat.

## Revendications

1. Pièce composite constituée par un support en matériau synthétique et par une couche métallique multicouche appliquée par l'intermédiaire d'un procédé de galvanisation, le support en matériau synthétique étant fabriqué à partir d'une composition thermoplastique constituée par
A) 50 à 90 parties en poids d'au moins un polycarbonate aromatique,
B) 10 à 50 parties en poids d'au moins un polymère greffé contenant une base de greffage particulaire élastique caoutchouteuse contenant un diène et une enveloppe (co)polymère de vinyle, la proportion de particules de caoutchouc dans la base de greffage présentant un diamètre < 200 nm, déterminée selon le procédé décrit dans la description, étant d'au moins 20% en poids,
C) 0 à 15 parties en poids d'au moins un additif, la somme des parties en poids des composants A) et B) dans la composition étant normalisée à 100,
(i) **caractérisée en ce que** la teneur en caoutchouc provenant du composant B dans la composition est d'au moins 6% en poids,
(ii) **caractérisée en ce que** le rapport K/S des proportions pondérales de base de greffage particulaire élastique caoutchouteuse contenant du butadiène provenant du composant B) dans la composition (=K) à la somme de (co)polymère de vinyle libre, c'est-à-dire non lié par covalence à la base de caoutchouc dans le polymère greffé selon le composant B), provenant du composant B) et de (co)polymère de vinyle libre provenant du composant C) dans la composition (=S) vaut au moins 1,5,
(iii) **caractérisée en ce que** le composant A) contient au moins un motif monomère qui est choisi dans le groupe constitué par les motifs monomères décrits par la forme générale (2) 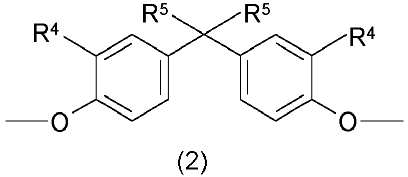 dans laquelle
R⁴ représente H, C₁-C₁₀-alkyle linéaire ou ramifié et
R⁵ représente C₁-C₁₀-alkyle linéaire ou ramifié,
et les motifs monomères dérivés de composés bis-(4-hydroxyphényle) qui sont pontés par l'intermédiaire de la position 1,1' d'un hydrocarbure cyclique le cas échéant substitué par des hétéroatomes,
(iv) **caractérisée en ce que** la proportion (A_{cyc}) de motifs monomères dérivés de composés bis-(4-hydroxyphényle), qui sont pontés par l'intermédiaire de la position 1,1' d'un hydrocarbure cyclique le cas échéant substitué par des hétéroatomes, par rapport à la somme de tous les motifs monomères dérivés de bisphénols dans le composant A) se situe dans la plage de 0 à 40% en poids,
où, dans le cas où la proportion (A_{cyc}) de motifs monomères dérivés de composés bis-(4-hydroxyphényle), qui sont pontés par l'intermédiaire de la position 1,1' d'un hydrocarbure cyclique le cas échéant substitué par des hétéroatomes, par rapport à la somme de tous les motifs monomères dérivés de bisphénols dans le composant A) se situe dans la plage < 5% en poids, la teneur en composant A) dans la composition est de 75 à 87 parties en poids et la teneur en composant B) dans la composition est de 13 à 25 parties en poids.

2. Pièce composite selon la revendication 1, constituée par un support en matériau synthétique et par une couche métallique multicouche appliquée par l'intermédiaire d'un procédé de galvanisation, le support en matériau synthétique étant fabriqué à partir d'une composition thermoplastique constituée par
A) 60 à 87 parties en poids d'au moins un polycarbonate aromatique,
B) 13 à 40 parties en poids d'au moins un polymère greffé contenant une base de greffage particulaire élastique caoutchouteuse contenant un diène et une enveloppe (co)polymère de vinyle,
C) 0,2 à 3 parties en poids d'au moins un additif,
la somme des parties en poids des composants A) et B) dans la composition étant normalisée à 100.

3. Pièce composite selon la revendication 1 ou 2, **caractérisée en ce que** le rapport K/S vaut au moins 2,1.

4. Pièce composite selon l'une quelconque des revendications précédentes, **caractérisée en ce que** A_{cyc} se situe entre 10 et 37% en poids.

5. Pièce composite selon l'une quelconque des revendications précédentes, **caractérisée en ce que** les motifs monomères dérivés de composés bis-(4-hydroxyphényle), qui sont pontés par l'intermédiaire de la position 1,1' d'un hydrocarbure cyclique le cas échéant substitué par des hétéroatomes, sont choisis parmi les structures qui sont décrites par les formules 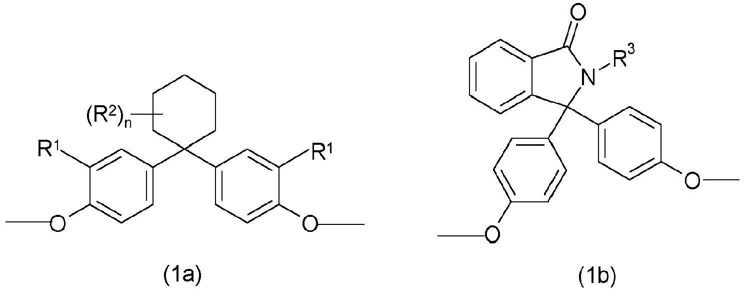 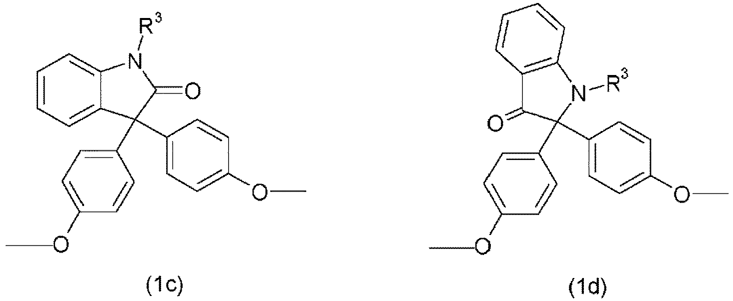 dans lesquelles
R¹ représente hydrogène ou C₁-C₄-alkyle ;
R² représente C₁-C₄-alkyle,
n représente 0, 1, 2 ou 3 et
R³ représente C₁-C₄-alkyle, aralkyle ou aryle.

6. Pièce composite selon la revendication 5, **caractérisée en ce que** les motifs monomères dérivés de composés bis-(4-hydroxyphényle), qui sont pontés par l'intermédiaire de la position 1,1' d'un hydrocarbure cyclique le cas échéant substitué par des hétéroatomes, sont choisis parmi les structures qui sont décrites par les formules (1b), (1c) et (1d).

7. Pièce composite selon la revendication 6, **caractérisée en ce que** le motif monomère dérivé de composés bis-(4-hydroxyphényle) qui est ponté par l'intermédiaire de la position 1,1' d'un hydrocarbure cyclique le cas échéant substitué par des hétéroatomes, est dérivé du 2-(phényl-3,3'-bis-(4-hydroxyphényl)-phtalamide.

8. Pièce composite selon l'une quelconque des revendications précédentes, **caractérisée en ce que** la viscosité relative en solution du composant A, mesurée dans du chlorure de méthylène selon la norme DIN 51562, se situe dans plage de 1,20 à 1,28.

9. Pièce composite selon l'une quelconque des revendications précédentes, **caractérisée en ce que** la surface de la couche métallique présente un degré de brillance, mesuré selon la norme ISO 2813, sous un angle d'observation de 60°, supérieur à 90.

10. Pièce composite selon l'une quelconque des revendications précédentes, **caractérisée en ce que** la couche métallique multicouche est constituée par au moins 3 couches métalliques différenciables d'un point de vue microscopique et/ou chimique-analytique.

11. Pièce composite selon l'une quelconque des revendications précédentes, **caractérisée en ce que** la couche métallique multicouche est constituée par, partant du support en matériau synthétique,
- une première couche en cuivre, une deuxième couche en nickel et une troisième couche en chrome ou
- une première couche en nickel, une deuxième couche en cuivre, une troisième couche en nickel et une quatrième couche en chrome.

12. Pièce composite selon la revendication 11, **caractérisée en ce que** la couche métallique de nickel suivant la couche métallique de cuivre, partant du support en matériau synthétique, présente une épaisseur qui représente au maximum la moitié de celle de la couche métallique de cuivre sous-jacente.

13. Pièce composite selon l'une quelconque des revendications précédentes, **caractérisée en ce que** la couche métallique multicouche présente une épaisseur de 30 à 50 µm.

14. Utilisation de la pièce composite selon l'une quelconque des revendications 1 à 13 comme pièce pour des automobiles, des appareils électriques, des objets domestiques, des collecteurs solaires, des réflecteurs de lumière ou comme élément fonctionnel pour l'évacuation de chaleur.
